# EUROPEAN PATENT APPLICATION

(11) **EP 3 222 706 A1**
(43) Date of publication of application: **27.09.2017**
(21) Application number: 16162469.7
(22) Date of filing: 25.03.2016
(51) Int. Cl.: C12G 1/02

(54) **METHOD FOR ACTIVATING WINE DURING ITS PRODUCTION PROCESS**

(71) Applicant: Zanzer, Alexander, 2018 Antwerpen (BE)
(72) Inventor: Zanzer, Alexander, 2018 Antwerpen (BE)
(74) Representative: Donné, Eddy

(57) **Abstract**

Method for activating wine during its production process (1) against pathogens such as bacteria and fungi, whereby resveratrol is added to the wine broth at specific stages of its production process. The resveratrol is dosed at levels of 20 mg/l during the production process to replace sulfite as a wine proserving substance. At the end of the production process, stevia and erythritol is added to sweeten the wine before bottling.

## Description

The present invention relates to a method for activating wine during its production process.

More specifically the invention is dedicated to avoid the use of sulfites or sulfur dioxide as wine preserving substances during its production, and to allow the production of wine with a low sugar content.

Traditionally the production process of wine starts with the harvest of grapes and the transportation of the grapes to a feed bin.

It is common practice to add sulfites already in the feed bin at a dosage of 20 mg SO₂/l wine broth, to safeguard the wine against bacterial or fungal infections.

Typically this sulfite level is maintained throughout the production process of the wine and in the resulting bottled wine too.

It is known that sulfite in wine can cause allergic reactions in consumers, or at least can easily cause headaches when a quantity of wine is consumed.

It is also known that resveratrol (or 3, 4', 5 stilbenetriol) is a natural substance of the skin of grapes, and is a phytoalexin produced naturally by several plants in response to injury when the plant is under attack by pathogens such as bacteria or fungi.

Red wine contains between 0,2 and 5,8 mg/l resveratrol, depending on the grape variety, while white wine has much less, because red wine is fermented with the skins of the grapes (Resveratrol in Wikipedia).

It is also known that a high sugar content in wine makes it unfit for consumption by people on a sugar restricted diet such as diabetic people.

The sugar content of wine can be lowered by fermenting the sugar away and converting it to alcohol, but this results in a very dry wine, and is often not appreciated by wine drinkers who prefer sweet wines.

To sweeten the wine, low calorie natural sweeteners can be used.

Stevia is a known natural sweetener and sugar substitute from the leaves of the plant species *Stevia rebaudiana* (Stevia, Wikipedia). The active compounds of stevia are steviol glycosides which have up to 150 times the sweetness of sugar and are not fermentable.

Erythritol is also a known natural sweetener and zero-calorie sugar substitute (Erythritol, Wikipedia)

It is therefore an objective of the invention to provide a solution for one or more of the above-mentioned disadvantages. To this end the present invention provides a method for activating wine against pathogens such as bacteria and fungi during its production process, wherein resveratrol is added to the wine broth at specific stages of its production process , and sulfite is not added during its production process.

Activating wine means here the addition of a substance, active against attacks of pathogens such as bacteria and fungi, by adding an extra dose of a natural preservative, resveratrol already present in the grapes and wine broth but at a lower concentration.

An advantage of this method for activating wine is that the use of sulfite during the production process is no longer required, and subsequently the wine is not allergenic or is no longer inducing headaches or adverse reactions in the consumer.

Another advantage is that resveratrol is a natural compound, already present in wine and especially in the grapes, as a phytoalexin produced in response to attack by pathogens such as bacteria or fungi, thereby protecting the wine broth against bacterial or fungal infections.

The preferred specific stages for resveratrol addition are the collection bin where the harvested grapes are collected, the beginning of the fermentation stage, the end of the fermentation stage, the beginning of the storage stage, and the end of the storage stage after fermentation.

An advantage of resveratrol addition in these stages is that the addition prevents bacterial and fungal infections during fermentation and storage after fermentation.

Preferably resveratrol is added to a dosage of 20 mg/l wine broth or wine at all the specific stages for resveratrol addition.

The advantage of this resveratrol addition is that it keeps the wine broth free of infections all the way up to the storage before bottling.

Preferably, stevia is added to the wine at the storage stage before bottling, and is added to a dosage of 150 mg/l wine, in order to give the wine a sweeter taste before it is bottled.

Preferably, erythritol is added to the wine at the storage stage before bottling, and is added to a dosage up to the maximum concentration allowed by European regulations.

An advantage of this sweeter taste is that it makes the wine more drinkable also for people on a sugar restricted diet such as diabetic patients, even when the sugar content of the wine is very low.

With the intention of better showing the characteristics of the invention, hereafter, as an example without any limitative character, a preferred embodiment of the method for activating wine during its production process is described, with reference to the accompanying drawings, wherein:
figure 1 schematically represents the production process for wine according to the invention;
figure 2 shows the chemical formula of resveratrol;
figure 3 shows the chemical formula of steviol;
figure 4 shows the chemical formula of ertythritol

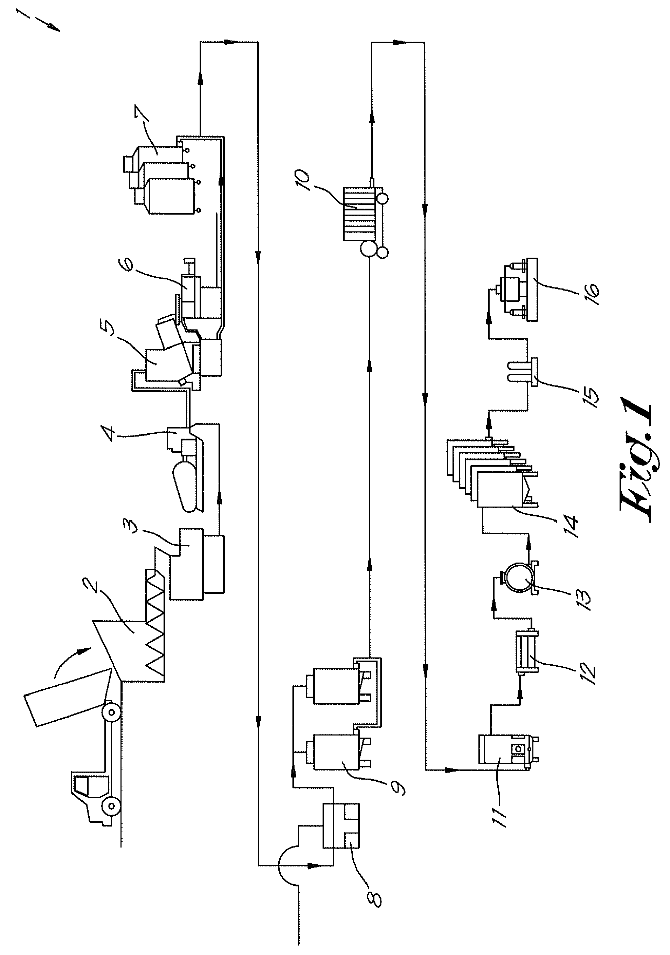

Figure 1 shows the complete production process 1 for wine according to the invention using a combination of resveratrol and stevia plus erythritol addition at specific stages. The production process starts with the harvest of the grapes, that is transported and collected in a feed bin 2, which drops the drapes in a roll crusher 3, whereafter a piston pump unit 4, moves the grapes slurry to a streamer 5, which drops the grapes slurry in a press 6, whereafter the wort is moved to fermentation tanks 7 for infusing and fermentation of the wort in the pulp. The fermented wort is then moved to an ingredients dispenser 8 sending the fermented wort with added ingredients to the storage tanks 9 for storage after fermentation. The fermented wort then passes through a filter 10 and a clarifier 11 of wine in the stream towards an ultra cooler 12 and a storage container in the cold 13. The wine is then moved to storage tanks 14 before bottling. From there the wine is moved through a membrane filtration unit to an installation 16 for sterile bottling of wine.

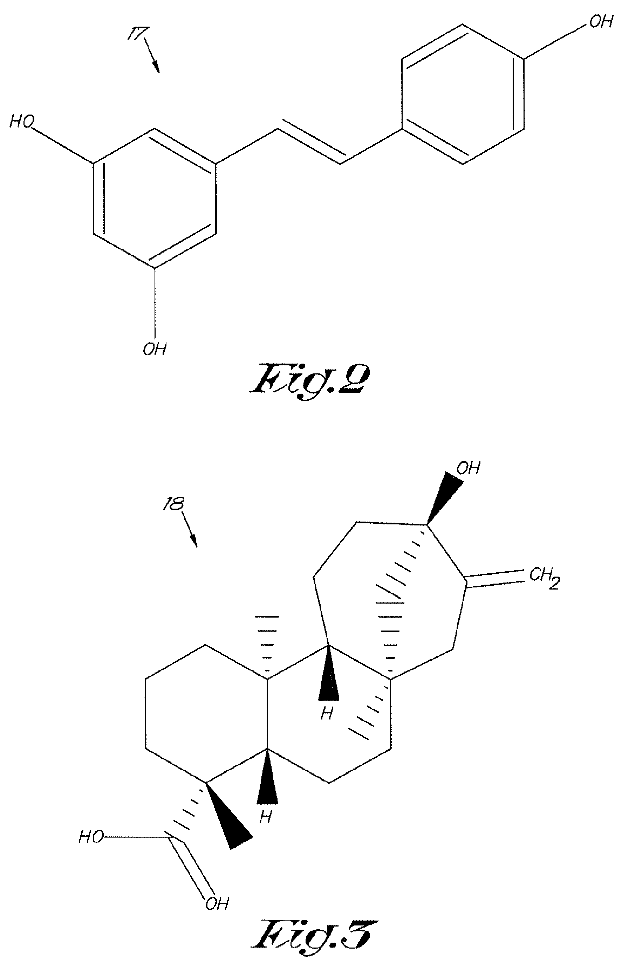

Figure 2 shows the chemical formula of resveratrol 17, the natural constituent of grapes, added at specific stages of the production process of wine according to the invention.

Figure 3 shows the chemical formula of steviol 18, the basic building block of stevia's sweet glycosides, added at the end of the production process before bottling the wine according to the invention.

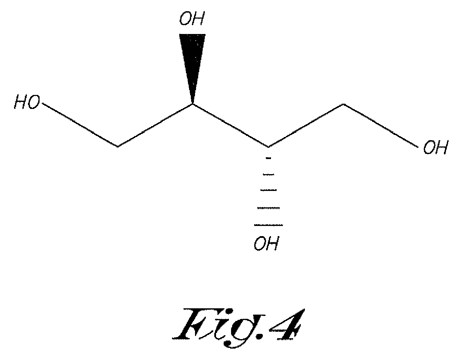

Figure 4 shows the chemical formula of erythritol, a low calorie sweetener occurring naturally in some fruit and fermented foods (Erythritol, Wikipedia), also added at the end of the production process.

The method for activating wine during its production process aims at keeping a sufficient concentration of resveratrol in the wine broth and filtered and cleared wine to prevent infection of the product during the production process, and the specific stages of the process where resveratrol is added are chosen accordingly.

This does not mean that other addition points for resveratrol in the process are excluded as long as the wanted levels of resveratrol are achieved.

However, the best results are obtained by selecting the following addition points of resveratrol:
- the feed bin at the beginning of the wine production process where harvested grapes are collected;
- the beginning of the fermentation stage 7;
- the end of the fermentation stage 7;
- the beginning of the storage stage 9 after fermentation, dosed by an ingredients dispenser 8;
- the end of the storage stage 9 after fermentation.

50 % of the added resveratrol is added at the fermentation stage 7, divided in 25 % at the beginning and 25 % at the end of the fermentation stage 7. The other 50 % is added proportionally during the process and mainly at the beginning and ending of the storage stage 9 before filtering the wine. The concentration aimed for is 20 mg/l wine wort or wine throughout the production process.

The addition of stevia is done at the storage stage 14 of the cleared wine, just before bottling and is dosed to a maximum of 150 mg/l wine according to the wine species at hand and its content of natural sugar remaining. Erythritol is added at the same storage stage 14 and is dosed up to the maximal concentration allowable under European regulations.

This invention is evidently not limited to the specific concentrations of resveratrol and/or stevia and erythritol mentioned in the description, but these components can be added in quantities that vary according to the type of wine that is being produced or according to the sugar content of the wine that is produced.

The present invention is in no way limited to the embodiment described by way of an example and represented in the figures, but a method for activating wine during its production process can be realized in various forms without leaving the scope of the invention as defined in the claims.

## Claims

1. Method for activating wine against pathogens such as bacteria and fungi during its production process (1), **characterized in that** resveratrol, active against attacks of pathogens, is added to the wine broth at specific stages of its production process, and sulfite is not added during its production process.

2. The method of claim 1, **characterized in that** the preferred specific stages for resveratrol addition are at the beginning and end of the fermentation stage (7), and at the beginning and end of the storage stage (9) after fermentation.

3. The method of claim 1, **characterized in that** resveratrol is added to a dosage of 20 mg/l wine broth at the beginning and at the end of the fermentation stage (7), and at the beginning and end of the storage stage (9) after fermentation.

4. The method of any of the preceding claims, **characterized in that** stevia and/or erythritol is added to the wine at the storage stage (14) before bottling.

5. The method of claim 4, **characterized in that** stevia is added to a dosage of 150 mg/l wine, and erythritol is added to a maximum allowed by European regulations.
